(19) **Europäisches Patentamt**

**European Patent Office**

**Office européen des brevets**

(11) **EP 0 986 467 B1**

(12) **EUROPÄISCHE PATENTSCHRIFT**

(45) Veröffentlichungstag und Bekanntmachung des Hinweises auf die Patenterteilung:
**31.10.2001 Patentblatt 2001/44**

(21) Anmeldenummer: **98934803.2**

(22) Anmeldetag: **27.05.1998**

(51) Int Cl.[7]: **B41C 1/045**, H04N 1/407

(86) Internationale Anmeldenummer:
**PCT/DE98/01442**

(87) Internationale Veröffentlichungsnummer:
**WO 98/55303 (10.12.1998 Gazette 1998/49)**

(54) **VERFAHREN ZUR SIGNALVERARBEITUNG**

SIGNAL PROCESSING METHOD

PROCEDE DE TRAITEMENT DE SIGNAUX

(84) Benannte Vertragsstaaten:
**CH DE ES FR GB IT LI**

(30) Priorität: **02.06.1997 DE 19722760**

(43) Veröffentlichungstag der Anmeldung:
**22.03.2000 Patentblatt 2000/12**

(73) Patentinhaber: **Heidelberger Druckmaschinen Aktiengesellschaft 69115 Heidelberg (DE)**

(72) Erfinder: **VON HÖVELING, Axel D-24148 Kiel (DE)**

(56) Entgegenhaltungen:
**WO-A-96/26836 WO-A-96/26837 US-A- 3 893 166 US-A- 5 424 845**

**Beschreibung**

Die Erfindung bezieht sich auf das Gebiet der elektronischen Reproduktionstechnik und betrifft ein Verfahren zur Signalverarbeitung in einer elektronischen Graviermaschine zur Gravur von Druckformen, insbesondere von Druckzylindern, für den Tiefdruck.

In einer elektronischen Graviermaschine bewegt sich ein Gravierorgan mit einem Gravierstichel als Schneidwerkzeug in axialer Richtung an einem rotierenden Druckzylinder entlang. Der von einem Graviersteuersignal gesteuerte Gravierstichel schneidet eine Folge von in einem Tiefdruckraster angeordneten Vertiefungen, Näpfchen genannt, in die Mantelfläche des Druckzylinders. Das Graviersteuersignal wird in einer Signalaufbereitungsstufe durch Überlagerung eines die Tonwerte zwischen "Licht" (Weiß) und "Tiefe" (Schwarz) repräsentierenden Graviersignals mit einem periodischen Rastersignal (Vibration) gebildet. Während das Rastersignal eine vibrierende Hubbewegung des Gravierstichels zur Erzeugung des Rasters bewirkt, steuert das Graviersignal entsprechend den wiederzugebenden Tonwerten die geometrischen Parameter der gravierten Näpfchen wie Längsdiagonale, Querdiagonale und Schnittiefe.

In der Signalverarbeitungsstufe erfolgt unter anderem eine Kalibrierung der Grasignalwerte für "Licht" und "Tiefe", die Überlagerung des korrigierten Graviersignals mit dem Rastersignal zur Erzeugung des Graviersteuersignals und die Verstärkung des Graviersteuersignals.

Aus der US-A-5 424 845 ist bereits ein Verfahren zur Signalverarbeitung in einer elektronischen Graviermaschine bekannt, bei dem der Graviersignalwert für "Tiefe" bekannt ist und der Graviersignalwert für "Licht" eingegeben wird, wobei zusätzlich ein Offsetwert aus den Graviersignalwerten berechnet wird.

Wird bei dem bekannten Verfahren zur Signalverarbeitung der Graviersignalwert für "Tiefe" eingestellt, so ändert sich gleichzeitig der Graviersignalwert für "Licht". Dadurch ergibt sich eine fehlerhafte Querdiagonale der gravierten Näpfchen für "Licht", und der Bediener muß in nachteiliger Weise den Graviersignalwert für "Licht" manuell korrigieren, damit die Querdiagonale bzw. der gravierte Tonwert bei Änderung des Graviersignalwertes für "Tiefe" konstant bleibt.

Aufgabe der vorliegenden Erfindung ist es daher, ein Verfahren zur Signalverarbeitung in einer elektronischen Graviermaschine zur Gravur von Druckformen, insbesondere von Druckzylindern, für den Tiefdruck derart zu verbessern, daß der Graviersignalwert für "Licht" automatisch konstant gehalten wird, wenn sich der Graviersignalwert für "Tiefe" ändert.

Diese Aufgabe wird erfindungsgemäß durch die Merkmale des Anspruchs 1 gelöst. Vorteilhafte Weiterbildungen sind in den Unteransprüchen angegeben.

Die Erfindung wird nachfolgend anhand der Fig. 1 bis 3 näher erläutert.

Es zeigen:

Fig. 1    ein prinzipielles Blockschaltbild einer Graviermaschine zur Gravur von Druckformen mit einer Signalaufbereitungsstufe,

Fig. 2    ein Ausführungsbeispiel für eine Signalaufbereitungsstufe und

Fig. 3    eine grafische Darstellung zur Erläuterung des Verfahrens.

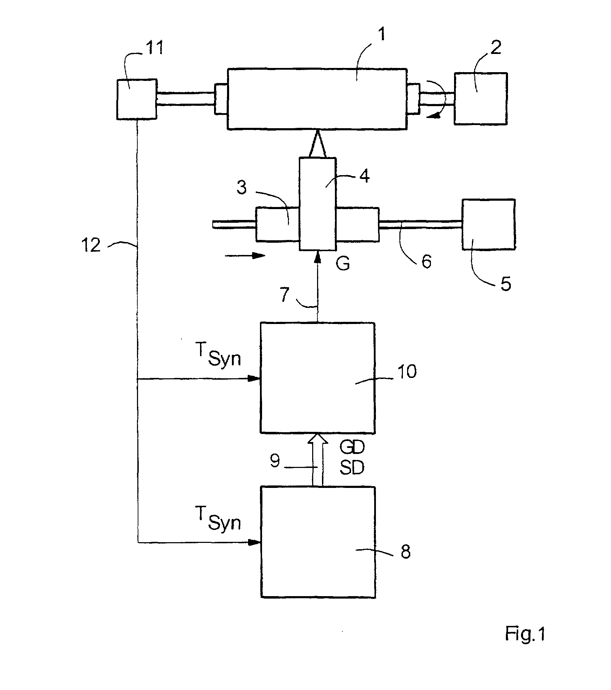

Fig. 1 zeigt ein prinzipielles Blockschaltbild einer Graviermaschine zur Gravur von Druckzylindern. Ein Druckzylinder (1) wird von einem Rotationsantrieb (2) rotatorisch angetrieben. Ein auf einem Gravierwagen (3) montiertes Gravierorgan (4) mit einem Gravierstichel als Schneidwerkzeug bewegt sich mit Hilfe einer durch einen Vorschubantrieb (5) angetriebenen Spindel (6) in Achsrichtung an dem rotierenden Druckzylinder (1) entlang.

Der durch ein analoges Graviersteuersignal (G) auf einer Leitung (7) gesteuerte Gravierstichel des Gravierorgans (4) schneidet gravierlinienweise eine Folge von in einem Tiefdruckraster angeordneten Näpfchen in die Mantelfläche des rotierenden Druckzylinders (1), während sich das Gravierorgan (4) axial an dem Druckzylinder (1) entlang bewegt. Das Gravierorgan (4) ist beispielsweise als Gravierorgan mit einem elektromagnetischen Antrieb für den Gravierstichel ausgebildet.

Während ein periodisches Rastersignal eine vibrierende Hubbewegung des Gravierstichels zur Erzeugung des Tiefdruckrasters bewirkt, bestimmen Gravurdaten (GD) entsprechend den zu gravierenden Tonwerten zwischen "Licht" und "Tiefe" die Eindringtiefen des Gravierstichels in die Mantelfläche des Druckzylinders (1).

Die Gravurdaten (GD) werden in einem Gravurdatenrechner (8) Gravierlinie für Gravierlinie bereitgestellt, wobei jedem zu gravierenden Näpfchen ein Gravurdatum von mindestens einem Byte zugeordnet ist, welches unter anderem als Gravierinformation den zu gravierenden Tonwert enthält. Beispielsweise ist dem Tonwert "Licht" das Gravurdatum $GD_L = 161$ und dem Tonwert "Tiefe" das Gravurdatum $GD_T = 0$ zugeordnet. In dem Gravurdatenrechner (8) werden außerdem Steuerdaten (SD) zur Steuerung der Signalverarbeitung bereitgestellt.

Gravurdaten (GD) und Steuerdaten (SD) werden über einen Datenbus (9) an eine Signalverarbeitungsstufe (10) weitergegeben, in der das Graviersteuersignal (G) für das Gravierorgan (4) erzeugt wird.

Zur Synchronisierung der Signalverarbeitung mit der Drehbewegung des Druckzylinders (1) ist ein Impulsgeber (11) mechanisch an den Druckzylinder (1) gekoppelt. Der Impulsgeber (11) erzeugt eine Synchronisierungstaktfolge ($T_{SYN}$), die über eine Leitung (12) an den Gravurdatenrechner (8) und an die Signalaufbereitungsstufe (10) gegeben wird.

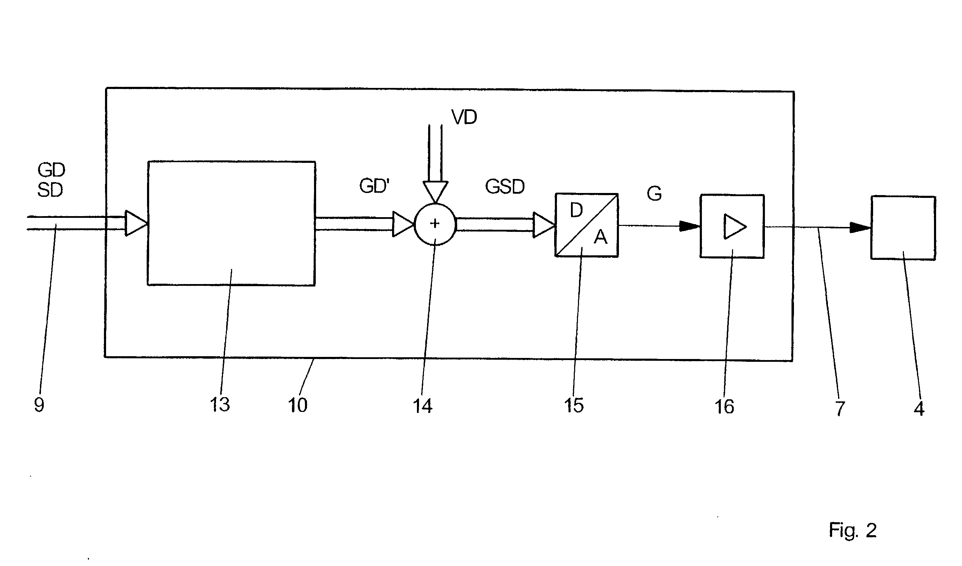

Fig. 2 zeigt ein Ausführungsbeispiel für die Signalaufbereitungsstufe (10). In der Signalaufbereitungsstufe (10) werden die Gravierdaten (GD) und die Steuerdaten (SD) über den Datenbus (9) an einen Signalprozessor (13) übermittelt.

In dem Signalprozessor (13) werden die Eingangs-Gravurdaten (GD) mit Hilfe von gespeicherten Einstellwerten ($EP_L$) für "Licht" und von Einstellwerten ($EP_T$) für "Tiefe" durch eine Kalibrierung derart in Ausgangs-Gravurdaten (GD') umgesetzt, daß die tatsächlich gravierten Ist-Tonwerte "Licht" und "Tiefe" den vorgegebenen Soll-Tonwerten "Licht" und "Tiefe" entsprechen. Dabei beeinflussen die Einstellparameter ($EP_L$) für "Licht" die Verstärkung und die Einstellwerte ($EP_T$) für "Tiefe" den Offset der Übertragungsfunktion GD' = f (GD) des Signalprozessors (13).

Als Signalprozessor (13) wird ein Prozessor verwendet, der schnelle Fließkommaoperationen ermöglicht, vorzugsweise ein Digitaler Signal Prozessor (DSP). Als Signalprozessor (13) kann beispielsweise der Digital Signal Prozessor vom Typ TMS 320C31 der Firma Texas Instruments eingesetzt werden.

Bei einem solchen Digitalen Signal Prozessor können in bevorzugter Weise die Einstellwerte ($EP_L$) für "Licht" und die Einstellwerte ($EP_T$) für "Tiefe" durch Übertragungskoeffizienten ($k_x$) modifiziert werden. Gleichzeitig sind die Eingangs-Gravierdaten (GD), die Übertragungskoeffizienten ($k_x$) und/oder die Berechnungs- und Verknüpfungsalgorithmen für die Eingangs-Gravurdaten (GD) durch die Steuerdaten (SD) veränderbar.

Die Kalibrierung der Eingangs-Gravurdaten (GD) in die Ausgangs-Gravurdaten (GD') erfolgt nach der allgemeinen Gleichung:

$$GD' = (GD \times k_1) \times (EP_L \times k_2) + EP_T \times k_3$$

Für den Tonwert "Licht" gilt:

$$GD'_L = (GD_L \times k_1) \times (EP_L \times k_2) + EP_T \times k_3 \text{ (Verstärkungskorrektur)}$$

Mit $GD_L$ = 161 ergibt sich:

$$GD'_L = (161 \times k_1) \times (EP_L \times k_2) + EP_T \times k_3$$

Für den Tonwert "Tiefe" gilt:

$$GD'_T = (GD_T \times k_1) \times (EP_L \times k_2) + EP_T \times k_3 \text{ (Offsetkorrektur)}$$

Mit $GD_T$ = 0 ergibt sich:

$$GD'_T = EP_T \times k_3$$

Zur Gewinnung der Graviersteuerdaten (GSD) werden den kalibrierten Ausgangs-Gravurdaten (GD') das Rastersignal bestimmende Vibrationsdaten (VD) in einem Addierer (14) gemäß folgender Gleichung hinzu addiert:

$$GSD = (GD \times k_1) \times (EP_L \times k_2) + EP_T \times k_3 + VD$$

Die Graviersteuerdaten (GSD) werden in einem D/A-Wandler (15) in das analoge Graviersteuersignal (G) umgewandelt. Das analoge Graviersteuersignal (G) wird anschließend in einem nachgeschalteten analogen Verstärker (16) verstärkt und über die Leitung (7) an das Gravierorgan (4) ausgegeben. Der Verstärker (16) kann beispielsweise als geschalteter Stromverstärker ausgebildet sein.

Nachfolgend wird das Verfahren zur Konstanthaltung des gravierten Tonwertes "Licht" bez. der Querdiagonalen ($q_L$) des gravierten Näpfchens "Licht" bei Änderung des Tonwertes "Tiefe" durch eine automatische Nachstellung des Wertes für "Licht" näher beschrieben.

Eine Neukalibrierung der Graviersignalwerte (GD) für "Licht" und "Tiefe" mittels der Einstellwerte ($EP_L$, $EP_T$) für "Licht" und "Tiefe" wird bei einem neuen Gravierauftrag fällig. Die Einstellwerte ($EP_{Lalt}$, $EP_{Talt}$) der vorangegangenen Kalibrierung sind gespeichert. Bei einer Neukalibrierung soll beispielsweise der Tonwert "Tiefe" nachkorrigiert werden, und es ist der entsprechende Einsteliwert ($EP_{Tneu}$) für "Tiefe" vorgegeben. Wie bereits in der Beschreibungseinleitung erwähnt, verändert sich der Tonwert "Licht" bei Änderung des Tonwertes "Tiefe", und es mußte bisher der Wert für "Licht" in nachteiliger Weise manuell nachgestellt werden, damit die Querdiagonale ($q_L$) des Näpfchens "Licht" erhalten bleibt.

Dieser Nachteil wird durch die automatische Nachstellung des Wertes "Licht" behoben, die in mehreren Schritten abläuft.

Ein einem ersten Schritt wird vor Einstellung des neuen Wertes für "Tiefe" der Differenzwert ($\Delta EP_T$) zwischen dem alten Einstellwert ($EP_{Talt}$) und dem vorgegebenen neuen Einstellwert ($EP_{Tneu}$) für "Tiefe" nach folgender Gleichung gebildet:

$$\Delta EP_T = EP_{Talt} - EP_{Tneu}$$

In einem zweiten Schritt wird aus dem Gravurdatum ($GD_L$) für "Licht", dem alten Einstellwert ($EP_{Lalt}$) für "Licht" und dem zuvor ermittelten Differenzwert ($\Delta EP_T$) ein neuer Einstellwert ($EP_{Lneu}$) für "Licht" berechnet.

Zunächst werden das alte und neue Ausgangs-Gravurdatum (GD'), die sich bei dem alten Einstellwert ($EP_{Lalt}$) und dem neuen Einstellwert ($EP_{Lneu}$) für "Licht" ergeben würden, nach der folgenden vereinfachten Gleichung, in der die Übertragungskoeffizienten ($k_x$) weggelassen sind, ermittelt:

$$GD' = GD \times EP_L + EP_T$$

$$GD'_{Lalt} = GD_L \times EP_{Lalt} + EP_{Talt}$$

$$GD'_{Lneu} = GD_L \times EP_{Lneu} + EP_{Tneu}$$

Da die Gravurdaten für "Licht" bei Änderung der Gravurdaten für "Tiefe" erhalten bleiben sollen, gilt:

$$GD'_{Lalt} = GD'_{Lneu}$$

Daraus ergibt sich der neue Einstellwert ($EP_{Lneu}$) für "Licht" zu:

$$EP_{Lneu} = 1/GD_L \ (\Delta EP_T + GD_L \times EP_{Talt})$$

Die Nachkalibrierung wird dann mit dem vorgegebenen neuen Einstellwert ($EP_{Tneu}$) für "Tiefe" und dem berechneten neuen Einstellwert ($EP_{Lneu}$) für "Licht" vorgenommen, wobei das Gravierorgan (4) bereits an dem Druckzylinder (1) anliegt. Damit der Gravierstichel des Gravierorgans (4) bei der Nachkalibrierung nicht schon fehlerhafte Näpfchen in die Mantelfläche des Druckzylinders (1) graviert, wird die Reihenfolge, in der die neuen Einstellwerte ($EP_{Lneu}$, $EP_{Tneu}$) aktiviert werden, in vorteilhafter Weise in Abhängigkeit von der zuvor festgestellten Differenz ($\Delta EP_T$) zwischen dem alten Einstellwert ($EP_{Talt}$) und dem neuen Einstellwert ($EP_{Tneu}$) für "Tiefe" durchgeführt. Ist die Differenz ($\Delta EP_T$) positiv, wird in zweckmäßiger Weise zunächst "Tiefe" und anschließend "Licht" eingestellt. In anderer Reihenfolge wird verfahren, wenn die Differenz ($\Delta EP_T$) negativ ist.

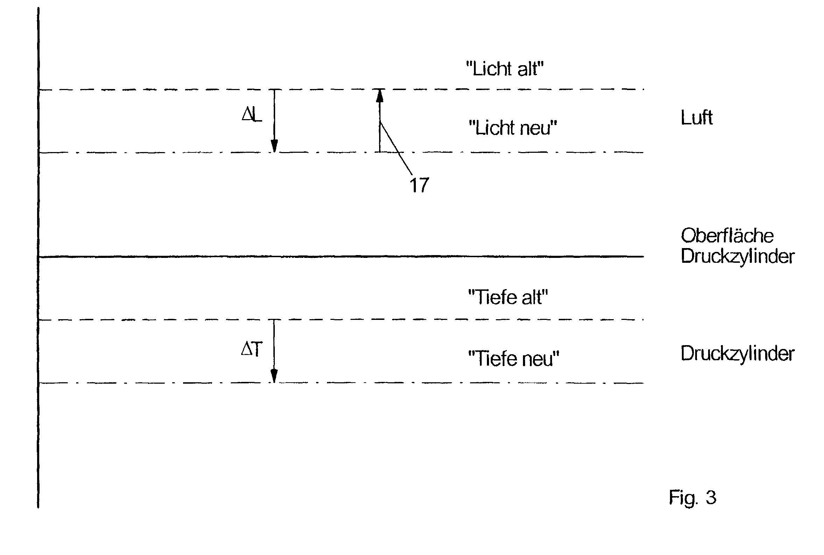

Fig. 3 zeigt eine grafische Darstellung zur Erläuterung des Verfahrens. Auf der Ordinate sind die Einstellwerte (EP) dargestellt. Die in der Darstellung gestrichelt gezeichneten Linien für "Licht" und "Tiefe" symbolisieren den Gleichstromanteil um den der Gravierstichel des Gravierorgans (4) um das Rastersignal schwingt.

Wird der Wert "Tiefe alt" bei der Kalibrierung um $\Delta T$ auf den Wert "Tiefe neu" eingestellt, ändert sich bei der herkömmlichen Vorgehensweise der Wert "Licht alt" in unerwünschter Weise um $\Delta L$ auf den Wert "Licht neu". Durch die automatische Korrektur (17) bleibt der Wert "Licht alt" bei Änderung des Wertes "Tiefe alt" auf den Wert "Tiefe neu" erhalten.

Mit einer ähnlichen Vorgehensweise ist es möglich, die Querdiagonale konstant zu halten, wenn das Rastersignal verändert wird.

**Patentansprüche**

1. Verfahren zur Signalverarbeitung in einer elektronischen Graviermaschine zur Gravur von Druckformen, insbesondere von Druckzylindern, für den Tiefdruck, bei dem

   - aus Gravurdaten (GD), welche vorgegebene Tonwerte zwischen "Licht" (Weiß) und "Tiefe" (Schwarz) repräsentieren, und aus einem periodischen Rastersignal zur Erzeugung eines Rasters Graviersteuersignalwerte (GS) gebildet werden,
   - ein Gravierstichel eines durch die Graviersteuersignalwerte (GS) gesteuerten Gravierorgans in die Druckform eine Folge von in dem Raster angeordneten Näpfchen eingraviert, deren Graviertiefen die tatsächlich gravierten Tonwerte bestimmen,
   - das Gravierorgan zur flächenhaften Gravur der Näpfchen eine Vorschubbewegung entlang der Druckform ausführt und
   - vor der Gravur die Graviersteuersignalwerte ($GS_L$; $GS_T$) für "Licht" und "Tiefe" durch einen Licht-Einstellwert ($EP_L$) und einen Tiefe-Einstellwert ($EP_T$) derart kalibriert werden, daß die gravierten Tonwerte "Licht" und "Tiefe" den vorgegebenen Tonwerten "Licht" und "Tiefe" entsprechen, **dadurch gekennzeichnet, daß** zur Konstanthaltung des gravierten Tonwertes "Licht" bei Änderung des Tonwertes "Tiefe"
   - vor der Gravur der Differenzwert ($\Delta EP_T$) zwischen dem alten Tiefe-Einstellwert ($EP_{Talt}$) und einem neuen Tiefe-Einstellwert ($EP_{Tneu}$) gebildet wird,
   - aus dem Gravurdatum ($GD_L$) für "Licht", dem alten Licht-Einstellwert ($EP_{Lalt}$) und dem Differenzwert ($\Delta EP_T$) ein neuer Licht-Einstellwert ($EP_{Lneu}$) berechnet wird und
   - eine automatische Nachkalibrierung des Graviersteuersignalwertes ($GS_L$) für "Licht" mit dem neuen Licht-Einstellwert ($EP_{Lneu}$) vorgenommen wird.

2. Verfahren nach Anspruch 1, **dadurch gekennzeichnet, daß** die Berechnung des neuen Licht-Einstellwertes ($EP_{Lneu}$) nach folgender Gleichung erfolgt:

$$EP_{Lneu} = 1/GD_L \; (GD_L \times EP_{Lalt} + \Delta EP_T)$$

3. Verfahren nach Anspruch 1 oder 2, **dadurch gekennzeichnet, daß** die Reihenfolge der Kalibrierung der Graviersteuersignalwerte (GS) in Abhängigkeit von der festgestellten Differenz $\Delta EP_T$ zwischen dem alten Tiefe-Einsteliwert ($EP_{Talt}$) und einem neuen Tiefe-Einstellwert ($EP_{Tneu}$) durchgeführt wird.

**Claims**

1. Method of processing signals in an electronic engraving machine for engraving printing forms, in particular printing cylinders, for intaglio printing, in which

   - engraving control signal values (GS) are formed from engraving data (GD) representing pre-setting tone values between "light" (white) and "depth" (black) and from a periodic grid signal for generating a grid,
   - an engraving needle of an engraving member controlled by the engraving control signal values (GS) engraves into the printing form a series of cells arranged in the grid, the engraving depths of which decide the tone values actually, engraved,
   - the engraving member performs a forward feed movement along the printing form for two-dimensional engraving of the cells and
   - before engraving the engraving control signal values ($GS_L$; $GS_T$) are calibrated for "light" and "depth" by a light settingting value ($EP_L$) and a depth setting value ($EP_T$) in such a way that the engraved tone values of "light" and "depth" correspond to the pre-setting tone values of "light" and "depth", **characterised in that** to keep the engraved tone value "light" constant when the tone value "depth" is changed
   - before engraving the differential value ($\Delta EP_T$) between the old depth setting value ($EP_{Told}$) and a new depth setting value ($EP_{Tnew}$) is formed,
   - a new light setting value ($EP_{Lnew}$) is calculated from the engraving data ($GD_L$) for "light", the old light setting value ($EP_{Lold}$) and the differential value ($\Delta EP_T$) and

- automatic re-calibration of the engraving control signal value ($GS_L$) for "light" is carried out with the new light setting value ($EP_{Lnew}$).

**2.** Method according to Claim 1, **characterised in that** calculation of the new light setting value (($EP_{Lnew}$) is done according to the following equation:

$$(EP_{Lnew}) = 1/GD_L \ (GD_L \ X \ (EP_{Lold}) + (\Delta EP_T)$$

**3.** Method according to Claim 1 or 2, **characterised in that** the sequence of the calibration of the engraving control signal values (GS) is carried out as a function of the established difference ($\Delta EP_T$) between the old depth setting value ($EP_{Told}$) and a new depth setting value ($EP_{Tnew}$).

**Revendications**

**1.** Procédé de traitement de signaux dans une machine à graver électronique pour graver des matrices d'impression notamment des cylindres d'impression pour l'impression en taille douce, selon lequel :

- à partir de données de gravure (GD) qui représentent des valeurs de teinte prédéterminées entre la « lumière » (blanc) et la « profondeur » (noir) et à partir d'un signal de trame périodique, pour générer une trame, on forme des valeurs de signal de commande de gravure (GS),
- un ciseau de gravure d'un organe de gravure commandé par les valeurs des signaux de commande de gravure (GS) grave dans la matrice d'impression, une succession de cuvettes réparties dans la trame et dont la profondeur de gravure définit la valeur de teinte à graver effectivement,
- l'organe de gravure exécute un mouvement d'avance le long de la matrice d'impression pour graver la surface des cuvettes et,
- avant la gravure, on calibre les valeurs du signal de commande de gravure ($GS_L$ ; $GS_T$) pour « lumière » et « profondeur » par une valeur de réglage de lumière ($EP_L$) et une valeur de réglage de profondeur ($EP_T$) de façon que les valeurs de teinte à graver « lumière » et « profondeur » correspondent aux valeurs de teinte prédéterminées « lumière » et « profondeur »,

**caractérisé en ce que**
pour maintenir constante la valeur de teinte à graver « lumière », lors d'une variation de la teinte « profondeur »,

- avant la gravure, on forme la valeur de différence ($\Delta EP_T$) entre l'ancienne valeur de réglage de la profondeur ($EP_{Tanc}$) et une nouvelle valeur de réglage de profondeur ($EP_{Tnouv}$),
- à partir de la donnée de gravure ($GD_L$) pour « lumière », de l'ancienne valeur de réglage de lumière ($EP_{Lanc}$) et de la valeur de différence ($\Delta EP_T$), on calcule une nouvelle valeur de réglage de lumière ($EP_{Lnouv}$) et,
- on effectue un post-calibrage automatique de la valeur du signal de commande de gravure ($GS_L$) pour « lumière » avec la nouvelle valeur de réglage de lumière ($EP_{Lnouv}$).

**2.** Procédé selon la revendication 1,
**caractérisé en ce que**
le calcul de la nouvelle valeur de réglage de lumière ($EP_{Lnouv}$) se fait selon l'équation :

$$EP_{Lnouv} = 1/GD_L \ (GD_L \ x \ EP_{Lanc} + \Delta EP_T)$$

**3.** Procédé selon la revendication 1 ou 2,
**caractérisé en ce qu'**
on effectue la succession des calibrages des valeurs du signal de commande de gravure (GS) en fonction de la différence constatée ($\Delta EP_T$) entre l'ancienne valeur de réglage de profondeur ($EP_{Tanc}$) et une nouvelle valeur de réglage de profondeur ($EP_{Tnouv}$).

Fig.1

Fig. 2

GD
SD

GD'

VD

GSD

G

D / A

9

13

10

14

15

16

7

4

8

EP 0 986 467 B1

"Licht alt"

ΔL

"Licht neu"

Luft

17

Oberfläche
Druckzylinder

"Tiefe alt"

ΔT

"Tiefe neu"

Druckzylinder

Fig. 3